# EUROPEAN PATENT SPECIFICATION

(11) **EP 3 232 709 B1**
(45) Date of publication and mention of the grant of the patent: **20.11.2019**
(21) Application number: 15866879.8
(22) Date of filing: 10.12.2015
(51) Int. Cl.: H04W 28/02, H04L 12/801

(54) **METHOD AND DEVICE FOR CONTROLLING CONGESTION IN MOBILE COMMUNICATION SYSTEM**
VERFAHREN UND VORRICHTUNG ZUR ÜBERLASTREGELUNG IN EINEM MOBILKOMMUNIKATIONSSYSTEM
PROCÉDÉ ET DISPOSITIF POUR RÉGULER L'ENCOMBREMENT DANS UN SYSTÈME DE COMMUNICATION MOBILE

(30) Priority: 12.12.2014 KR 20140178923
(43) Date of publication of application: 18.10.2017
(73) Proprietor: Samsung Electronics Co., Ltd., Gyeonggi-do 16677 (KR)
(72) Inventor: YOON, Soonyoung, Gyeonggi-do 16677 (KR)
(74) Representative: Nederlandsch Octrooibureau
(86) International application number: PCT/KR2015/013539
(87) International publication number: WO 2016/093648

(56) References cited:
- WO-A1-2013/085325
- WO-A1-2014/088294
- KR-A- 20140 035 859
- KR-A- 20140 111 407
- KR-A- 20140 126 728
- KR-B1- 101 365 938
- US-A1- 2011 128 874
- US-A1- 2014 355 428

## Description

### [Technical Field]

The present invention relates to a congestion control method and device in a mobile communication system. In particular, the present invention relates to a method and device for controlling congestion in consideration of applications and resources.

### [Background Art]

The mobile communication system has been developed for a user to communicate on the move. With the rapid advance of technologies, the mobile communication system has evolved to the level capable of providing high speed data communication service as well as voice telephony service.

Meanwhile, unlike voice services, data services are provided using resources determined based on the transmit data amount and channel condition. Accordingly, a wireless communication system, particularly a cellular communication system, is provided with a scheduler, which takes charge of resource allocation in consideration of the required resource amount, channel condition, data amount, etc. In most cellular communication systems, typically, the scheduler is located in base stations for radio resource management, and this is the case even in the Long-Term Evolution (LTE) system as one of the next generation mobile communication systems.

For such data services, it is necessary to guarantee service-specific qualities with different priorities. One of the service-specific quality control policies may be to allow subscribers paying much money to access more diverse services and to limit subscribers paying less money to specific services in an enhanced mobile communication system. In recent mobile communication systems, also the offer of the same service in different qualities has been used.

More recently, mobile communication operators have planned to deploy systems for providing their subscribers with multimedia services including voice and data services, the systems being characterized by classifying subscribers into different classes to provide the classes with services different in quantity and quality. In the mobile communication systems supporting multimedia services, it is preferable to guarantee Quality of Service (QoS) of all services as much as possible or, although it is difficult to guarantee the QoS for all services, to guarantee QoS for services with a high priority.

Meanwhile, if the number or ratio of users connected to the mobile communication system exceed a predetermined threshold capable of guaranteeing QoS for all the connected users with given resources, a congestion control technique is used to release the resources allocated to the users with a low priority among the connected users to maintain the number of users enjoying a guaranteed QoS at a certain level. The congestion control technique may also be used to resolve the congestion caused by overload on a bearer with a high priority in such a way of releasing the resources allocated to the users with a low priority.

US 2014/355428 A1 discloses a dynamic spectrum arbitrage (DSA) system that includes a dynamic spectrum policy controller (DPC) and a dynamic spectrum controller (DSC) that together dynamically manage the allocation and use of resources across different networks. The DSC component was disclosed to to include wired or wireless connections to eNodeBs, a policy and charging rules functions (PCRF) component/server and various other network components. It further discloses that the PCRF is configured to receive eNodeB congestion state information from the eNodeB, categorize each of the identified wireless devices into a category selected from a plurality of categories, select a subset of the identified wireless devices based on the category into which they are categorized, and perform congestion response operations on the selected wireless devices so as to reduce the congestion of the eNodeB.

### [Disclosure of Invention]

### [Technical Problem]

The present invention aims to provide an enhanced congestion control method and device for use in a mobile communication system. Also, the present invention aims to provide a method and device for controlling congestion in consideration of application characteristics and resources.

### [Solution to Problem]

In accordance with an aspect of the present invention, a congestion control method of a mobile communication system includes identifying a congestion state, identifying congestion control information including required physical resource information of each users and in-use physical resource information of each users, determining at least one resource release target user based on the required physical resource information and the in-use physical resource information, and releasing resources allocated to the at least one resource release target user.

In accordance with another aspect of the present invention, a congestion control device of a mobile communication system includes a communication unit which communicates with at least one network node and a control unit which controls identifying a congestion state, checking congestion control information including required physical resource information of each users and in-use physical resource information of each users, determining at least one resource release target user based on the required physical resource information and the in-use physical resource information, and releasing resources allocated to the at least one resource release target user.

The technical problems to be solved by the present invention are not restricted to the aforementioned, and those skilled in the art will clearly appreciate other technical problems not mentioned so far from the following description.

### [Advantageous Effects of Invention]

The congestion control method and device of the present invention is advantageous in terms of being applicable to a mobile communication system. Also, the congestion control method and device of the present invention is advantageous in terms of controlling congestion efficiently based on application characteristics and resources.

Also, the congestion control method and device of the present invention is advantageous in terms of improving a service quality experience of a user by means of detecting the running of a video application and controlling congestion based on the video encoding rate of the application.

### [Brief Description of Drawings]

FIG. 1 is a diagram illustrating LTE mobile communication system architecture;
FIG. 2 is a flowchart illustrating a QCI- or ARP-based congestion control method according to an embodiment of the present invention;
FIG. 3 is a diagram illustrating a configuration of a resource amount-based congestion control system according to an embodiment of the present invention;
FIG. 4 is a flowchart illustrating a congestion control method according to the second embodiment of the present invention; and
FIG. 5 is a block diagram illustrating a congestion controller according to an embodiment of the present invention.

### [Mode for the Invention]

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention. The following description is made only of the parts necessary to help understand the operations according to various embodiments of the present invention and is not made of other parts to avoid obscuring the subject matter of the present invention.

The device and method proposed in an embodiment of the present invention is applicable to various communication systems such as a Long-Term Evolution (LTE) mobile communication system, an LTE-Advanced (LTE-A) mobile communication system, a High Speed Downlink Packet Access (HSDPA) mobile communication system, a High Speed Uplink Packet Access (HSUPA) mobile communication system, a 3^{rd} Generation Project Partnership 2 (3GPP2) High Rate Packet Data (HRPD) mobile communication system, 3GPP2 Wideband Code Division Multiple Access (WCDMA) mobile communication system, a 3GPP2 Code Division Multiple Access (CDMA) mobile communication system, an Institute of Electrical and Electronics Engineers (IEEE) 802.16m communication system, an Evolved Packet System (EPS), and a Mobile Internet Protocol (Mobile IP) systemThe following description is directed to the LTE system.

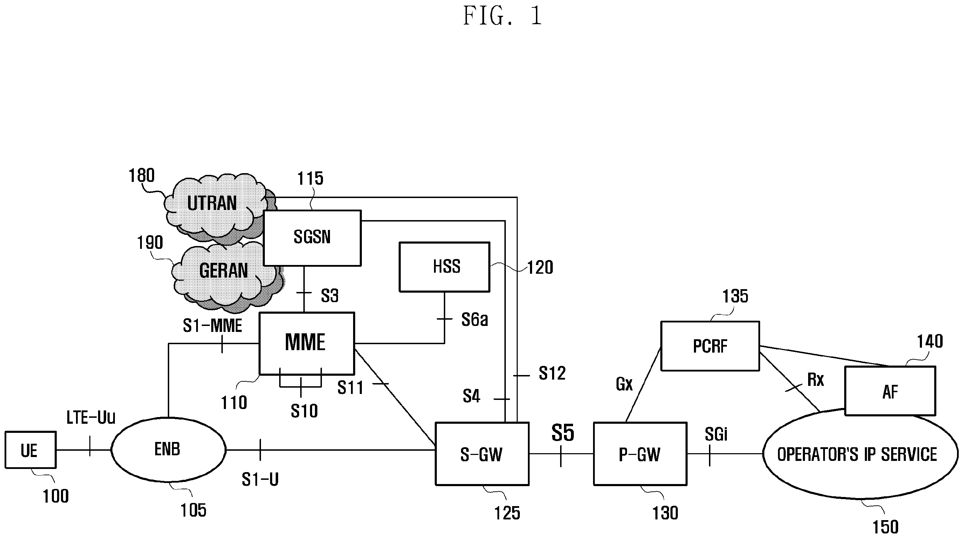

FIG. 1 is a diagram illustrating LTE mobile communication system architecture.

In reference to FIG. 1, a radio access network of the LTE mobile communication system includes a User Equipment (UE) 100, a next generation base station (hereinafter, interchangeably referred to as evolved Node B, base station, RAN node, eNB, and node B) 105, a Mobile Management Entity (MME) 110, a Serving-Gateway (S-GW) 125, a Packet Data Network Gateway (PDN-Gateway or P-GW) 130, an Application Function (AF) 140, and a Policy Control and Charging Rules Function (PCRF) 135. The radio access network may include or connect to a Universal Terrestrial Radio Access Network (UTRAN) 180, a GSM EDGE Radio Access Network (GERAN) 190, a Serving GPRS Support Node (SGSN) 115, and a Home Subscriber Server (HSS) 120.

The UE 100 may connect to Internet Protocol (IP) services 150 of an external network, e.g., operator network, via the eNB 105, the S-GW 125, and the P-GW 130. The AF 140 is an entity for exchanging application information with the user at an application level. The PCRF 135 is an entity for controlling Quality of Service (QoS) policies of a user. The PCRF 135 may provide a Policy and Charging Control (PCC) rule to the P-GW 130.

The eNB 105 is a Radio Access Network (RAN) node, which is equivalent to Radio Network Controller (RNC) of the UTRAN 180 and Base Station Controller (BSC) of the GERAN 190. The eNB 105 is connected to the UE 100 through a radio channel and functions similarly to the legacy RNC/BSC. The eNB 105 performs radio resource management (such as radio bearer control, radio admission control, dynamic radio resource allocation, load management, and inter-cell interference control) as well as providing the user with a radio interface.

In LTE, because all user traffic including real-time services such as Voice over IP (VoIP) is served through shared channels, it is necessary to perform scheduling based on status information collected from the UE 100. The eNB 105 takes charge of this function.

The S-GW 125 provides data bearers. The S-GW 125 establishes and releases a data bearer under control of the MME 110. The S-GW 125 terminates an Evolved-UTRAN (E-UTRAN) and Evolved Packet Core (EPC). The S-GW 125 is an anchoring point for inter-eNB handover and inter-3GPP system handover.

The MME 110 performs various control functions. There may be a plurality of eNBs connected to the MME 110. The MME 110 is an E-UTRAN control plane entity which communicates with the HSS 120 for user authentication and user profile download and takes charge of EPS mobility management and EPS session management for the UE 100 through Non Access Stratum (NAS) signaling. The HSS 120 is a central database storing user profiles and provides the MME 110 with user authentication information and the user profilesThe P-GW 130 provides connectivity from the UE 100 to a Packet Data Network (PDN) and performs packet filtering. The P-GW allocates an IP address to the UE 100 and works as a mobility anchoring point for handover between 3GPP and non-3GPP systems. The P-GW 130 may control the bearers for a service flow selected for congestion control of the congestion control device. Adjusting bearers may include that the P-GW 130 releases a bearer or decreases data rate on the bearer.

The P-GW receives a PCC rule from the PCRF 135 and takes charge of per-UE billing function. The PCRF 135 is a policy and charging control entity, which takes charge of policy control determination and charging control function. The PCC rule generated by the PCRF 135 is sent to the P-GW 130.

Typically, a User Plane (UP) link is established between the UE 100 and the P-GW 130 via the eNB 105 and the S-GW 125. In particular, the radio channel established between the UE 100 and the eNB 105 is significantly resource constraint.

A description is made of the bearers and QoS for use in the LTE system hereinafter. Although the description is directed to video traffic, the type of data traffic is not limited to video traffic. An LTE network delivers all Internet video traffic, with the exception of video conference traffic of the operator, over a default bearer in a best effort service. That is, it is possible to deliver the traffic within the default bearer regardless of the characteristics of the aforementioned video traffic. For example, the eNB fairly schedules the traffic within the default bearer. However, different traffic patterns may require different types of bearer QoS characteristics. The different types of bearer QoS characteristics configured depending on the video traffic pattern may be used efficiently for transporting video traffic to a UE through a mobile network.

In an LTE network, the bearer QoS is identified with parameters such as QoS Class Identifier (QCI), Guaranteed Bit Rate (GBR), Maximum Bit Rate (MBR), and Allocation and Retention Priority (ARP). Among these parameters, GBR and MBR are configured for a GBR bearer regardless of the characteristics of the aforementioned default bearer. The ARP indicates a priority of allocation and retention for allocating and maintaining a bearer in the LTE network. The ARP is used to determine whether to establish a bearer in want of resources or accept a change request and to select a bearer to drop in handover. The ARP value is neither used in a data transmission process (e.g., scheduling and rate control) of the eNB nor transmitted to the user. The QCI is used for packet forwarding on a bearer. For example, the QCI includes scheduling weights, admission thresholds, queue management thresholds, and link layer protocol configuration. In more detail, the QCI includes resource type, packet delay budget, and packet error loss rate.

If overload occurs in a mobile communication system, this may cause congestion. Such a congestion may occur when the number or ratio of users connected to the mobile communication system exceed a predetermined threshold capable of guaranteeing the service QoS for all the connected users with given resources. Such a congestion may incur a delay in communication between a UE and an eNB. In order to resolve the congestion, a congestion control is performed in the mobile communication system. For example, a congestion control device may control an access attempt of at least one UE. This means that the congestion control device may release the connection to the UE or stop providing a service. The congestion control device may release the resources allocated to the user with the lowest priority among the connected users to maintain a predetermined number of users being satisfied with the QoS. Also, when it is to necessary to resolve the congestion caused by overload on a bearer with a high priority, the congestion control technique for releasing the sources allocated to the user with a low priority may be used. It may be possible to preempt a user with a low priority for congestion control. This may be called a preemption technique. It may also be possible to perform the congestion control in such a way of terminating the process still in progress for providing a service to a certain UE.

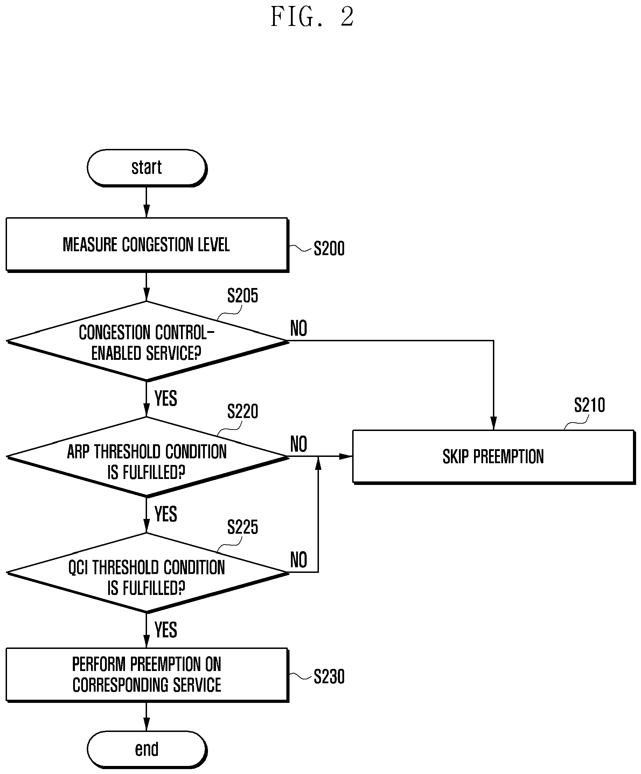

It may be possible to use QCI or ARP as a metric for selecting a user for release of the resources allocated thereto in congestion control. FIG. 2 is a flowchart illustrating a QCI- or ARP-based congestion control method according to an embodiment of the present invention. A description is made of the operation of a congestion controller with reference to FIG. 2. The congestion controller may be one of core network nodes. In an embodiment of the present invention, the terms "congestion control target user", "congestion control target application", and "congestion control target service" may be used interchangeably with a similar meaning. The expressions "releasing resources allocated to a user" and "releasing a resource allocated to a user" may be used with a similar meaning.

In reference to FIG. 2, if congestion occurs in the network, the congestion controller operates as follows. The congestion controller may measure a congestion level at step S200. The congestion controller may also determine ARP or QCI corresponding to the measured congestion level. The ARP or QCI value may be determined according to the congestion level because the resource release is from a large number of users for a high congestion level and from a small number of users for a low congestion level.

The congestion controller may determine at step S205 whether a service being provided to at least one user is a congestion control-enabled service. A congestion control-enabled service means a service which allows release of the resources allocated therefor when a predetermined threshold condition is fulfilled. Such a service may also be called a preemption-enabled service. If it is determined at step S205 that the corresponding service is not a congestion control-enabled service, the procedure goes to step S210. If it is determined that the corresponding service is a congestion control-enabled service, the procedure goes to step S220.

At step S210, the congestion controller may skip releasing the resources allocated for the corresponding service because the corresponding service is not a congestion control-enabled service. At step S220, the congestion controller may determine whether a predetermined condition is fulfilled and, if so, release the resources allocated for the corresponding service.

At step S220, the congestion controller determines whether the congestion level of at least one service fulfills an ARP threshold condition related to the corresponding service. For example, if the ARP of the corresponding service is equal to or greater than a threshold ARP value, it may be determined that the threshold condition is fulfilled. If the threshold condition is fulfilled, the procedure goes to step S225. If the threshold condition is not fulfilled, the procedure goes to step S210.

At step S225, the congestion controller determines whether the congestion level of at least one service fulfils a QCI threshold condition related to the corresponding service. For example, if the QCI of the corresponding service is equal to or greater than a threshold QCI value, it may be determined that the threshold condition is fulfilled. If the threshold condition is fulfilled, the procedure goes to step S230. If the threshold condition is not fulfilled, the procedure goes to step S210.

Steps S220 and S225 may be performed in reverse order or selectively omitted so as to be followed by step S230.

At step S230, the congestion controller may perform preemption on the service fulfilling the above conditions. That is, the congestion controller may release the resources allocated for the service fulfilling the above conditions. The congestion controller may release the resources allocated to multiple services fulfilling the above conditions. It may be possible to escape from the congestion state by releasing the resources allocated for the services fulfilling a predetermined condition. The above procedure may be repeated until the congestion state is resolved or the congestion level drops below a predetermined level.

A congestion state may be resolved in this way. The embodiment of FIG. 2 is directed to the QCI- and/or ARP-based preemption method. In the embodiment of FIG. 2, how to select a preemption target with priority among the services fulfilling the conditions of steps S220 and S225 is not described. This means that the preemption may lower the quality experience of a user who is enjoying a high quality experience. Also, releasing the resources allocated for a certain service may have little substantial effect on congestion resolution because no consideration is taken of how much effect the resource release from the user to be preempted has on quality improvement of other users.

The second embodiment of the present invention is directed to a method for substantially improving the quality experience by overcoming the shortcomings of the embodiment of FIG. 2. Although the description of the second embodiment is made separately from the embodiment of FIG. 2 for convenience of explanation, it may also be possible to incorporate the method of FIG. 2 into the second embodiment. The second embodiment of the present invention proposes a method for identifying a user, a UE, or a service for releasing the resources allocated thereto in a congestion situation based on the application characteristics and resource usage amounts.

For example, it may be possible to detect the running of a video application and the video encoding rate of the video application and release the resources allocated to the users being served at an unsatisfactory level of quality experience so as to protect against a lowering of the quality experience of other users. It may also be possible to release the bearers consuming a large amount of Physical Resource Block (PRB) to improve the quality of the service to other users. Although the description is directed to a case where video applications are resource release targets, the resource release targets are not limited to the video applications in an embodiment of the present invention. Video applications, and applications or services for which required resource amounts can be acquired may be the preemption target services or applications in the present invention. In the case of a video application, it may be possible to acquire the information on the resource amount required for providing the corresponding service.

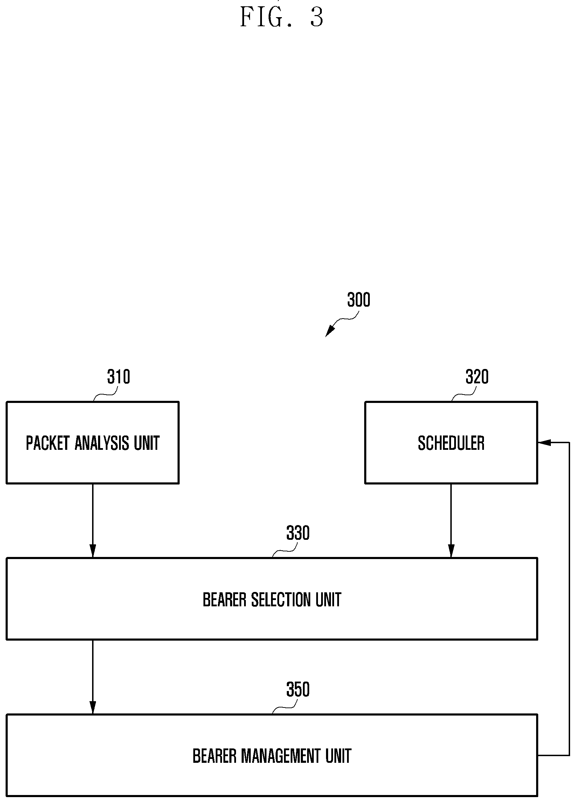

FIG. 3 is a diagram illustrating a configuration of a resource amount-based congestion control system according to an embodiment of the present invention.

The congestion control system 300 may include a packet analysis unit 310, a scheduler 320, a bearer selection unit 330, and a bearer management unit 350. The packet analysis unit 310 may check for the characteristics and encoding rate of an application. It is assumed that the application is a video application. In this case, the packet analysis unit 310 may detect the video application and the encoding rate of the video application. The packet analysis unit 310 may calculate a number of PRBs required for supporting the video encoding rate based on the video encoding rate, per-user channel quality, and a per-PRB bit amount. The information on the application, the encoding rate, the channel quality and/or the number of required PRBs may be transferred to the bearer selection unit 330.

The scheduler 320 may allocate bearers to the bearer selection unit 330 for providing a service. The scheduler 320 may also check for bearer PRB usage amount per user and report it to the bearer selection unit 330.

The bearer selection unit 330 may generate a candidate resource release target list. The bearer selection unit 330 may generate the candidate list based on the information received from the packet analysis unit 310 and the scheduler 320. The bearer selection unit 330 may compare a resource usage amount and a resource requirement amount to select the users whose resource requirement amount is less than the resource usage mount as the candidate resource release (preemption) targets. The candidate list may be generated for a plurality of users. The resource usage amount may be a per-user PRB usage amount, and the resource requirement amount may be a per-user PRB requirement amount.

The bearer selection unit 330 may select at least one of the users that does not meet the required resources for the service as the resource release target user. For example, the bearer selection unit 330 may select a user with a low priority and the highest PRB requirement amount as the resource release target user from the candidate list. The bearer selection unit 330 may also select a user with a low priority and the highest PRB usage amount as the resource release target user from the candidate list. It may also be possible to apply the PRB requirement amount and PRB usage amount in sequence.

The bearer selection unit 330 may transfer the information on the user selected as the resource release target to the bearer management unit 340. For example, it may be possible to transmit a release target bearer identifier. The information on the user may be the information on the service or bearer designated for the corresponding user.

The bearer management unit 340 may manage bearers for the selected users based on the information received from the bearer selection unit 340. For example, it may be possible to release the bearer allocated to the user. Releasing a bearer may be releasing the resources allocated to the user. The bearer management unit 340 may release the bearer established with an Evolved Packet Core (EPC). The bearer management unit 340 may notify the scheduler 320 of the released bearer. The scheduler 320 may notify the bearer selection unit 330 of the release of the bearer for the corresponding user.

The bearer selection unit 330 may perform part of the operations of the packet analysis unit 310 and/or part of the operations of the bearer management unit 340, the bearer selection unit 330 may perform part of the operations of the scheduler 320. The bearer selection unit 330 may include at least one of the packet analysis unit 310, the scheduler 320, and the bearer management unit 340. The bearer selection unit 330 may be a congestion controller. The congestion controller may be included in the PCRF or implemented as a separate entity. In the case of being implemented as a separate entity, the congestion controller may be connected electrically or via communication to the PCRF .

In the embodiment of FIG. 2, there is no provision of a method for determining a priority order of the users fulfilling the threshold conditions as resource release targets. In the second embodiment, however, it may be possible to determine the priority order of the candidate resource release target users based on the PRB requirement amount or PRB usage amount and release the resources based on the priority order. In the second embodiment, it may be possible to check for the use of a service (e.g., video application) of which resource requirement can be checked and the video encoding rate in a congestion situation and release the resources allocated to the users experiencing an unsatisfactory quality experience. Releasing the resources allocated to the users experiencing an unsatisfactory quality experience may have less effect on degradation of the quality experience. It may also be possible to predict the contribution of a resource release to the entire congestion control and make a control decision based thereon in consideration of the PRB usage amount or PRB requirement amount, thereby improving the communication quality experience. In the second embodiment, the process of determining resource release target users for congestion control and handling the allocated resources may be applied to the process of selecting bearer adjustment target service flows and adjusting the bearers corresponding to the selected service flows. Here, the bearer adjustment may be performed by the P-GW under the control of the congestion controller. The bearer adjustment may include releasing the corresponding bearer and adjusting data rate (data rate reduction) on the bearer.

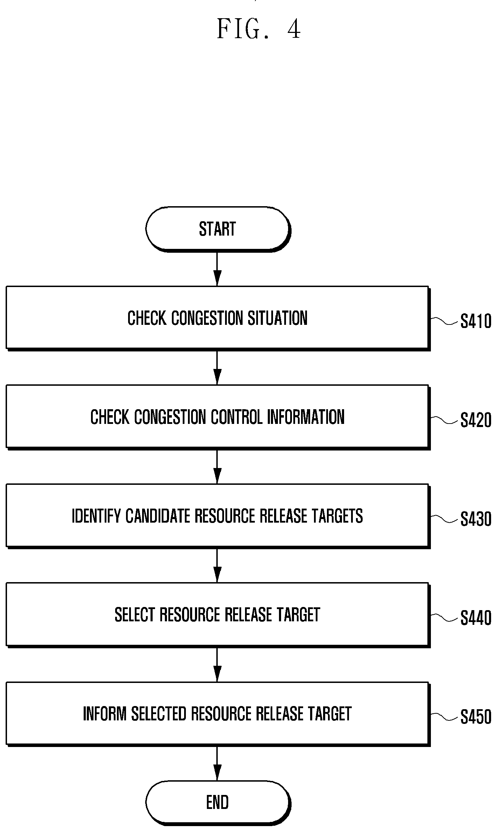

FIG. 4 is a flowchart illustrating a congestion control method according to the second embodiment of the present invention.

In reference to FIG. 4, the congestion controller may detect that the system is in a congestion situation at step S410. For example, the congestion controller may measure the congestion level. If the measured congestion level is equal to or greater than a predetermined level, the congestion controller may determine this as a congestion situation and start a congestion control operation. The congestion control may be performed differently according to the congestion level. If the congestion level is high, it is necessary to release the resources allocated to plural users or a user with a large amount of resources. If the congestion level is low, it may be sufficient to release the resources allocated to a relatively small number of users or a user with a small amount of resources.

The congestion controller may check congestion control information at step S420. The congestion control information includes the information necessary for selecting the users for releasing the resources or bearers allocated thereto. This information may include per-user or per-service application characteristic information (e.g., video application), encoding rate information, required resource amount information (required PRB), and resource use information (using PRB). The congestion controller may check the encoding rate of the application. The congestion controller may also check for the number of PRBs required for supporting the encoding rate of the corresponding application based on the encoding rate of the application, channel quality of the user, or the per-PRB bit amount. The congestion control information may be acquired in such a way of performing measurement or calculation at the congestion controller or receiving from another entity.

The congestion controller may identify the resource release targets based on the congestion control information at step S430. It may also be possible to check a candidate resource release target list for multiple users or services. The information on the resource release target or the candidate resource release target list may be received from another entity or generated by the congestion controller based on the congestion control information. The congestion controller may select the candidate resource release targets based on the resource usage amount and resource requirement amount information. The congestion controller may select a user (service or service flow) whose resource usage amount is less than a resource requirement amount as the candidate resource release (preemption) target user. It may also be possible to generate a candidate resource release target list including plural users. The resource requirement amount may be determined based on the encoding rate of the corresponding application, the channel quality, or the per-PRB bit amount.

There are resources required for executing normally a specific application. For example, the encoding rate of a video application may be set to 2 mbps or 4 mbps depending on the quality of the video application. If the information on the size and time of the video application is implicitly provided, it may also be possible to calculate the encoding rate based on the time and size information. Meanwhile, the data rate supportable with the given PRBs may be limited depending on the communication environment of the user. If the communication environment is good, it may be possible to support the service using a small number of PRBs, each PRB having a large number of bits. If the communication environment is bad, it may be necessary to use a plurality of PRBs for supporting the service normally because the per-PRB bit amount is small. The per-PRB bit amount information or the per-PRB available bit amount information may be the Modulation and Coding Scheme (MCS) or Modulation order Product code Rate (MPR) for use in transmission from an eNB to a UE. The eNB may determine or calculate the per-PRB available bit amount based on the Channel Quality Indicator (CQI) indicating per-user channel condition reported by the UE. It eNB is possibleto determine a high MCS level for a stable communication environment and a low MCS level for an unstable communication environment, the communication environment being determined based on the channel status information received from the UE. Also, It is possible to increase the MPR upon receipt of an ACK and decrease the MPR upon receipt of a NACK. Increasing the MPR may be equivalent to increasing the MCS level, and decreasing the MPR may be equivalent to deceasing the MCS level.

The encoding rates of applications different in type and running for different users may be different from each other, the numbers of available bits per PRB may vary depending on the communication environment, and the numbers of PRBs necessary for normally providing the services may be different.

Table 1 shows a number of required PRBs and a number of in-use PRBs per application.

**[Table 1]**

| Application | Number of required PRBs | Number of in-use PRBs | Number of additionally required PRBs |
|---|---|---|---|
| Application 1 | 10 | 5 | 5 |
| Application 2 | 4 | 2 | 2 |
| Application 3 | 8 | 6 | 2 |
| Application 4 | 4 | 5 | - |
| Application 5 | 6 | 6 | - |

In Table 1, the number of required PRBs is the information determined based on the encoding rate of an application and a number of available bits per BRP. The number of in-use PRBs is the number of PRBs in use by the currently running application.

It is assumed that the congestion controller is managing 5 applications in a congestion situation. Applications 1, 2, and 3 are in a situation where the number of required PRBs is greater than the number of in-use PRBs. This means that the number of allocated PRBs is not enough for providing the corresponding service normally and there are no PRB resources allocated for maintaining the encoding rate. Applications 4 and 5 are in a situation where the number of in-use PRGs is greater than the number of required PRBs so as to provide the corresponding service normally. Accordingly, the congestion controller may select one of applications 1, 2, and 3 as a candidate resource release (preemption) target. In the case that a candidate resource release target list is generated, applications 1, 2, and 3 may be included in the list.

In the second embodiment of the present invention, applications 4 and 5 being normally served are not selected as candidate resource release targets. It is not preferable to release the resources allocated to the user or application being normally served for the purpose of congestion control. It is most efficient, in view of a user's quality experience, to release the resources allocated to part of applications 1, 2, and 3, which cannot guarantee normal services. In the case of considering only the QCI or ARP, the resource release target is selected based on the QCI level regardless of the normality of the current service, and this may increase the probability of selecting applications 4 and 5 being normally serviced as the resource release target, resulting in reduction of the quality experience of the corresponding user. The second embodiment of the present invention proposes a method for solving this problem.

The congestion controller may select a resource release target at step S440. The resource release target may be selected in consideration of information on priority, required PRB amount, and in-use PRB amount. The priority may include QCI or ARP information. It may be possible to select an application with a low priority in association with the QCI or ARB as the resource release target among application included in the candidate resource releases target list. For more detail on the QCI- and ARP-based resource release target selection procedure, refer to the description made with reference to FIG. 2.

A description is made hereinafter of the method for selecting a resource release target based on the required PRB amount and/or in-use PRB amount. It may be possible to select a resource release target based on the required PRB amount. For example, an application with the largest required PRB amount may be selected as a resource release target. In Table 1, application 1 requires the largest amount of resources. Accordingly, it may be possible to release the resources allocated to application 1.

The congestion controller may select a resource release target based on the number of PRBs to be allocated for normal service additionally. In order for the application requiring a large number of additional PRBs to operate normally, it may be necessary to release a large number of resources allocated to another application, incurring the risk of reduction of the quality experience of a user. Accordingly, it may be possible to select the application requiring a large number of additional PRBs as a resource release target. In Table 1, application 1 requires 5 additional PRBs for normal service, and each of applications 2 and 3 requires 2 additional PRBs for normal service. Accordingly, the congestion controller may select application 1 as a resource release target.

It may also be possible to select a resource release target based on the the amount of in-use PRBs. Using the metric of the number of in-use PRBs is advantageous in terms of congestion control because it is easy to acquire the information on the number of PRBs capable of being secured through resource release. In Table 1, application 1 has 5 in-use PRBs, application 2 has 2 in-use PRBs, and application 3 has 6 in-use PRBs. This means that it is preferable to release the resources allocated to applications 1 or 3 rather than releasing the resources allocated to application 2 in terms of the number of PRBs capable of being secured. In the case of using the metric of the amount of in-use PRBs, it may be possible to consider the impact of releasing the resources allocated to an application on another application. In this case, it may be possible to use the information on the number of PRBs additionally required for normal service per application. The number of additionally required PRBs for normal service per application may be determined based on the number of required PRBs and the number of in-use PRBs. In the example of Table 1, it may be possible for applications 2 and 3 to provide their services normally by releasing the resources allocated to application 1 because the 5 PRBs secured by releasing the resources allocated to application 1 are sufficient in number for applications 2 and 3 that each require 2 additional PRBs. In the case of releasing the resources allocated to application 2 or 3, however, at least one application still lacks PRBs. Accordingly, if resource release is to be considered, it is most efficient to release the resources allocated to application 1.

The congestion controller may transmit the information on at least one application or user selected as the resource release target. The congestion controller may transmit the information to an entity responsible for managing bearers. The information on the application may be the information indicating the resource, bearer, or service allocated to the application. The information indicating the bearer may include a bearer ID, and the information indicating the service may include a service ID.

Next, the congestion controller may determine whether the congestion state has been resolved. If the congestion state has been resolved, the procedure may end. If the congestion state has not been resolved, the steps S410 to S450 may be repeated.

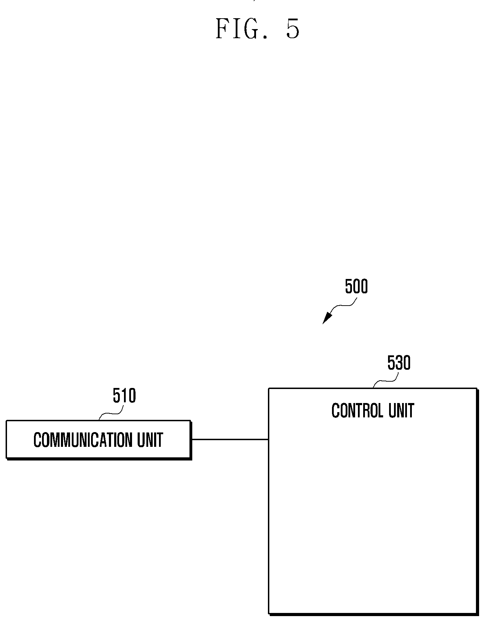

FIG. 5 is a block diagram illustrating a congestion controller according to an embodiment of the present invention.

In reference to FIG. 5, the congestion controller 500 may include a communication unit 510 and a control unit 530. The communication unit may transmit and/or receive signals to and/or from at least one network node. The control unit 530 may control the overall operation of the congestion controller 500. The control unit 530 may perform a congestion control operation in a congestion situation. In an embodiment of the present invention, the congestion controller may be included in a PCRF. Also, the congestion controller may be an external entity connected to the PCRF.

According to an embodiment, the control unit 530 may identify a congestion state, check for the congestion control information per user, determine at least one resource release target user based on the PRB-related information included in the congestion control information, and control to release the resources allocated to the resource release target user. The PRB-related information may include information on the required PRBs per user and in-use PRBs per user. The information on the required PRBs may be determined based on the encoding rate of the service provided to the user and the per-PRB available bit amount information. The resource release may include releasing part of bearers allocated to the user.

The per-PRB available bit amount information may include a Modulation and Coding Scheme (MCS) or Modulation order Product code Rate (MPR), which is determined based on the channel status information reported by the user. The channel status information may be a Channel Quality Indicator (CQI).

The control unit 530 may control to identify a candidate resource release target user based on the information on the required PRBs and in-use PRBs. Here, the candidate resource release target user may be a user having the in-use PRBs less in number than the required PRBs. The control unit 530 may control to determine, among the candidate resource release target users, the user with the lowest priority determined based on QCI as the resource release target user.

The control unit 530 may also control to determine, among the users, the user with the largest number of in-use PRBs as the resource release target user. The control unit 530 may also control to determine, among the users, the user with the greatest difference between the number of required PRBs and the in-use PRBs as the resource release target user.

The control unit 530 may also control to determine the resource release target user based on the number of in-use PRBs of a predetermined user and the number of additional PRBs required for multiple users.

If the congestion control state is not resolved after allocating additional resources to the determined user, the control unit 530 may control to determine an additional resource release target user and control releasing the resources allocated to the additional resource release target user.

The control unit 530 may control to select a service flow related to a resource release target and release the resources allocated for the selected service flow. That is, the control unit 530 may select a service flow related to the resource release target and adjust the service flow for congestion control as well as determine a resource release target user and release the resources allocated to the resource release target user.

The control unit 530 may control a P-GW to block resource transmission on the bearer related to the selected service flow. The control unit 530 may also control the P-GW to reduce data rate on the bearer related to the selected service flow.

Although it is exemplarily depicted in FIG. 5 for convenience of explanation, the congestion controller is not limited to the exemplary configuration. The control unit may include a plurality of entities. The operations of the congestion controller are not limited by those described with reference to FIG. 5. The congestion controller may perform the congestion control operations disclosed in the embodiments of the present invention as described with reference to FIGs. 1 to 5.

Although various embodiments of the present disclosure have been described using specific terms, the specification and drawings are to be regarded in an illustrative rather than a restrictive sense in order to help understand the present invention. It is obvious to those skilled in the art that various modifications and changes can be made.

## Claims

1. A congestion control method of a mobile communication system, the method comprising:
identifying a congestion state (S410);
identifying congestion control information including required physical resource information of each of a plurality of users and in-use physical resource information of each of the plurality of users (S420);
determining at least one resource release target user based on the required physical resource information and the in-use physical resource information (S430); and
releasing resources allocated to the at least one resource release target user.

2. The method of claim 1, wherein the required physical resource information includes required physical resource block, PRB, information and in-use physical resource information includes in-use PRB information.

3. The method of claim 2, wherein the required PRB information is determined based on encoding rates of services being provided to the users and per-PRB available bit amount information, and
wherein the per-PRB available bit amount information comprises modulation and coding scheme, MCS, or modulation order product code rate, MPR, for use by a base station per user, the MCS or MPR being determined based on channel status information reported by the users.

4. The method of claim 2, further comprising identifying candidate resource release target users based on the required PRB information and in-use PRB information,
wherein the candidate resource release target user is a user whose in-use PRB amount is less than the required PRB amount, and
wherein the at least one resource release target user is a user, among the candidate resource release target users, having a lowest priority determined based on channel quality indicator, CQI.

5. The method of claim 2, further comprising one of:
wherein the at least one resource release target user comprises a user, among the plurality of users, having a largest in-use PRB amount,
wherein the at least one resource release target user comprises a user having a largest difference between the required PRB amount and the in-use PRB amount, and
wherein the at least one resource release target user is determined based on the in-use PRB amount of a specific user and additionally required PRB amounts of the plurality of users.

6. The method of claim 1, further comprising:
determining, if the congestion state is not resolved after releasing the resources allocated to the at least one resource release target user, an additional resource release target user; and
releasing the resources allocated to the additional resource release target user,
wherein the resources are bearers allocated to the user.

7. The method of claim 1, wherein determining the at least one resource release target user comprises selecting a service flow related to the resource release target, and releasing the resources allocated to the at least one resource target user comprises releasing the resources allocated for the selected service flow, and
wherein releasing the resource allocated for the selected service flow user comprises one of:
blocking, at a packet data network gateway, P-GW, resource transmission on a bearer carrying the selected service flow, and
dropping, at a packet data network gateway, P-GW, resource transmission rate on a bearer carrying the selected service flow.

8. A congestion control device (500) of a mobile communication system, the device comprising:
a communication unit (510) configured to communicate with at least one network node; and
a control unit (530) configured to control identifying a congestion state, checking congestion control information including required physical resource information of each of a plurality of users and in-use physical resource information of each of the plurality of users, determining at least one resource release target user based on the required physical resource information and the in-use physical resource information, and releasing resources allocated to the at least one resource release target user.

9. The device of claim 8, wherein the required physical resource information includes required physical resource block, PRB, information and in-use physical resource information includes in-use PRB information.

10. The device of claim 9, wherein the required PRB amount is determined based on encoding rates of services being provided to the users and per-PRB available bit amount information, and
wherein the per-PRB available bit amount information comprises modulation and coding scheme, MCS, or modulation order product code rate, MPR, for use by a base station per user, the MCS or MPR being determined based on channel status information reported by the users.

11. The device of claim 9, wherein the control unit is configured to control identifying candidate resource release target users based on the required PRB amount and in-use PRB amount,
wherein the candidate resource release target user is a user whose in-use PRB amount is less than the required PRB amount, and
wherein the at least one resource release target user is a user, among the candidate resource release target users, having a lowest priority determined based on channel quality indicator, CQI.

12. The device of claim 9, further comprises one of:
wherein the at least one resource release target user comprises a user, among the plurality of users, having a largest in-use PRB amount,
wherein the at least one resource release target user comprises a user having a largest difference between the required PRB amount and the in-use PRB amount, and
wherein the at least one resource release target user is determined based on the in-use PRB amount of a specific user and additionally required PRB amounts of the plurality of users.

13. The device of claim 8, wherein the control unit is configured to control determining, if the congestion state is not resolved after releasing the resources allocated to the at least one resource release target user, an additional resource release target user and releasing the resources allocated to the additional resource release target user.

14. The device of claim 8, wherein the device is a policy charging rule function, PCRF.

15. The device of claim 8, wherein in the control unit is configured to control selecting a service flow related to the resource release target user and releasing the resources allocated for the selected service flow, and
wherein releasing the resource allocated for the selected service flow user comprises one of:
the control unit is configured to control a packet data network gateway, P-GW, to block resource transmission on a bearer carrying the selected service flow, and
wherein the control unit is configured to control a packet data network gateway, P-GW, to drop resource transmission rate on a bearer carrying the selected service flow.

16. The method of claim 1, wherein the congestion control information includes application characteristic information associated with a user or a service.

17. The device of claim 8, wherein the congestion control information includes application characteristic information associated with a user or a service.

## Patentansprüche

1. Überlastregelungsverfahren eines mobilen Kommunikationssystems, wobei das Verfahren Folgendes umfasst:
Identifizierung eines Überlastungszustands (S410);
Identifizierung von Überlastregelungsinformationen einschließlich erforderlicher physikalischer Ressourceninformationen von jedem von einer Vielzahl von Benutzern und verwendeter physikalischer Ressourceninformationen von jedem aus der Vielzahl von Benutzern (S420);
Ermittlung mindestens eines Ressourcenfreigabe-Zielbenutzers, basierend auf den erforderlichen physikalischen Ressourceninformationen und den verwendeten physikalischen Ressourceninformationen (S430); und Freigabe der Ressourcen, die dem mindestens einen Ressourcenfreigabe-Zielbenutzer zugewiesen sind.

2. Verfahren nach Anspruch 1, wobei die erforderlichen physikalischen Ressourceninformationen erforderliche PRB(physikalischer Ressourcenblock)-Informationen umfassen und die verwendeten physikalischen Ressourceninformationen verwendete PRB-Informationen umfassen.

3. Verfahren nach Anspruch 2, wobei die erforderlichen PRB-Informationen basierend auf Codierraten von Diensten ermittelt werden, die an die Benutzer geliefert werden, und pro-PRB verfügbaren Bitmengeninformationen, und
wobei die pro-PRB verfügbaren Bitmengeninformationen Modulations- und Codierschema, MCS, oder Produkt-Coderate erster Modulationsordnung, MPR, umfassen, zur Verwendung durch eine Basisstation pro Benutzer, wobei MCS oder MPR basierend auf Kanalstatusinformationen ermittelt wird, die von den Benutzern angegeben werden.

4. Verfahren nach Anspruch 2, das des Weiteren die Identifizierung von Ressourcenfreigabe-Zielbenutzerkandidaten umfasst, basierend auf den erforderlichen PRB-Informationen und verwendeten PRB-Informationen,
wobei der Ressourcenfreigabe-Zielbenutzerkandidat ein Benutzer ist, dessen verwendete PRB-Menge geringer als die erforderliche PRB-Menge ist, und
wobei der mindestens eine Ressourcenfreigabe-Zielbenutzer ein Benutzer ist, unter den Ressourcenfreigabe-Zielbenutzerkandidaten, der eine niedrigste Priorität hat, ermittelt per Kanalqualitätsanzeiger, CQI.

5. Verfahren nach Anspruch 2, das des Weiteren eines der folgenden umfasst:
wobei der mindestens eine Ressourcenfreigabe-Zielbenutzer einen Benutzer, unter der Vielzahl von Benutzern, mit einer größten verwendeten PRB-Menge umfasst,
wobei der mindestens eine Ressourcenfreigabe-Zielbenutzer einen Benutzer mit einem größten Unterschied zwischen der erforderlichen PRB-Menge und der verwendeten PRB-Menge umfasst, und
wobei der mindestens eine Ressourcenfreigabe-Zielbenutzer basierend auf der verwendeten PRB-Menge eines spezifischen Benutzers und zusätzlich erforderlicher PRB-Mengen der Vielzahl von Benutzern ermittelt wird.

6. Verfahren nach Anspruch 1, das des Weiteren Folgendes umfasst:
Ermittlung, falls der Überlastungszustand nach Freigabe der Ressourcen nicht gelöst ist, die dem mindestens einen Ressourcenfreigabe-Zielbenutzer zugewiesen wurden, eines zusätzlichen Ressourcenfreigabeziel-Benutzers; und Freigabe der Ressourcen, die dem zusätzlichen Ressourcenfreigabe-Zielbenutzer zugewiesen sind, wobei die Ressourcen Träger sind, die dem Benutzer zugewiesen worden sind.

7. Verfahren nach Anspruch 1, wobei die Ermittlung des mindestens einen Ressourcenfreigabe-Zielbenutzers die Auswahl eines Service-Flows umfasst, der auf das Ressourcenfreigabeziel bezogen ist, und die Freigabe der Ressourcen, die dem mindestens einen Ressourcenzielbenutzer zugewiesen sind, die Freigabe der Ressourcen umfasst, die für den ausgewählten Service-Flow zugewiesen sind, und
wobei die Freigabe der Ressource, die dem ausgewählten Service-Flow-Benutzer zugewiesen ist, eines der Folgenden umfasst:
Blockieren, an einem Paketdatennetzgateway, P-GW, der Ressourcenübertragung auf einem Träger, der den ausgewählten Service-Flow trägt, und
Reduzieren, an einem Paketdatennetzgateway, P-GW, der Ressourcenübertragungsrate auf einem Träger, der den ausgewählten Service-Flow trägt.

8. Überlastregelungsvorrichtung (500) eines mobilen Kommunikationssystems, die Folgendes umfasst:
eine Kommunikationseinheit (510), konfiguriert, um mit mindestens einem Netzknoten zu kommunizieren; und
eine Steuereinheit (530), konfiguriert, um die Identifizierung eines Überlastungszustands zu steuern, Überlastregelungs-Informationen zu kontrollieren einschließlich erforderlicher physikalischer Ressourceninformationen von jedem aus einer Vielzahl von Benutzern und verwendeten physikalischen Ressourceninformationen von jedem aus der Vielzahl von Benutzern, mindestens einen Ressourcenfreigabe-Zielbenutzer zu ermitteln, basierend auf den erforderlichen physikalischen Ressourceninformationen und den verwendeten physikalischen Ressourceninformationen, und Ressourcen freizugeben, die dem mindestens einen Ressourcenfreigabe-Zielbenutzer zugewiesen sind.

9. Vorrichtung nach Anspruch 8, wobei die erforderlichen physikalischen Ressourceninformationen PRB(erforderlicher physikalischer Ressourcenblock)-Informationen umfassen und die verwendeten physikalischen Ressourceninformationen verwendete PRB-Informationen umfassen.

10. Vorrichtung nach Anspruch 9, wobei die erforderliche PRB-Menge basierend auf Codierraten von Diensten ermittelt wird, die an die Benutzer geliefert werden, und pro-PRB verfügbaren Bitmengeninformationen, und
wobei die pro-PRB verfügbaren Bitmengeninformationen Modulations- und Codierschema, MCS, oder Produkt-Coderate erster Modulationsordnung, MPR, umfassen, zur Verwendung durch eine Basisstation pro Benutzer, wobei MCS oder MPR basierend auf Kanalstatusinformationen ermittelt wird, die von den Benutzern angegeben werden.

11. Vorrichtung nach Anspruch 9, wobei die Steuereinheit konfiguriert ist, um die Identifizierung von Ressourcenfreigabe-Zielbenutzerkandidaten zu steuern, basierend auf der erforderlichen PRB-Menge und der verwendeten PRB-Menge,
wobei der Ressourcenfreigabe-Zielbenutzerkandidat ein Benutzer ist, dessen verwendete PRB-Menge geringer als die erforderliche PRB-Menge ist, und
wobei der mindestens eine Ressourcenfreigabe-Zielbenutzer ein Benutzer ist, unter den Ressourcenfreigabe-Zielbenutzerkandidaten, der eine niedrigste Priorität hat, ermittelt per Kanalqualitätsanzeiger, CQI.

12. Vorrichtung nach Anspruch 9, die des Weiteren eines der Folgenden umfasst:
wobei der mindestens eine Ressourcenfreigabe-Zielbenutzer einen Benutzer umfasst, unter der Vielzahl von Benutzern, der eine größte verwendete PRB-Menge hat,
wobei der mindestens eine Ressourcenfreigabe-Zielbenutzer einen Benutzer mit einem größten Unterschied zwischen der erforderlichen PRB-Menge und der verwendeten PRB-Menge umfasst, und
wobei der mindestens eine Ressourcenfreigabe-Zielbenutzer basierend auf der verwendeten PRB-Menge eines spezifischen Benutzers und zusätzlich erforderlicher PRB-Mengen der Vielzahl von Benutzern ermittelt wird.

13. Vorrichtung nach Anspruch 8, wobei die Steuereinheit konfiguriert ist, um, wenn der Überlastungszustand nach Freigabe der Ressourcen nicht gelöst ist, die dem mindestens einen Ressourcenfreigabe-Zielbenutzer zugewiesen sind, die Ermittlung eines zusätzlichen Ressourcenfreigabe-Zielbenutzers und die Freigabe der Ressourcen zu steuern, die dem zusätzlichen Ressourcenfreigabe-Zielbenutzer zugewiesen sind.

14. Vorrichtung nach Anspruch 8, wobei die Vorrichtung eine Policy and Charging Rules Function ist, PCRF.

15. Vorrichtung nach Anspruch 8, wobei die Steuereinheit konfiguriert ist, um die Auswahl eines Service-Flows bezogen auf den Ressourcenfreigabe-Zielbenutzer zu steuern sowie die Freigabe der Ressourcen, die dem ausgewählten Service-Flow zugewiesen sind, und
wobei die Freigabe der Ressource, die dem ausgewählten Service-Flow-Benutzer zugewiesen ist, eines der Folgenden umfasst:
die Steuereinheit ist konfiguriert, um ein Paketdatennetzgateway, P-GW, zu steuern, um die Ressourcenübertragung auf einem Träger zu blockieren, der den ausgewählten Service-Flow trägt, und
wobei die Steuereinheit konfiguriert ist, um ein Paketdatennetzgateway, P-GW, zu steuern, um die Ressourcenübertragungsrate auf einem Träger zu reduzieren, der den ausgewählten Service-Flow trägt.

16. Verfahren nach Anspruch 1, wobei die Überlastregelungs-Informationen die Anwendung charakteristischer Informationen umfasst, die mit einem Benutzer oder einem Dienst verbunden sind.

17. Vorrichtung nach Anspruch 8, wobei die Überlastregelungs-Informationen die Anwendung charakteristischer Informationen umfassen, die mit einem Benutzer oder einem Dienst verbunden sind.

## Revendications

1. Procédé de contrôle de l'encombrement d'un système de communication mobile, le procédé comprenant :
identifier un état d'encombrement (S410) ;
identifier de l'information de contrôle de l'encombrement incluant de l'information de ressources physiques requise de chacun parmi une pluralité d'utilisateurs et de l'information de ressources physiques en utilisation de chacun parmi la pluralité d'utilisateurs (S420) ;
déterminer au moins un utilisateur cible de libération de ressources sur la base de l'information de ressources physiques requise et l'information de ressources physiques en utilisation (S430) ;
et libérer les ressources attribuées à l'au moins un utilisateur cible de libération de ressources.

2. Procédé selon la revendication 1, où l'information de ressources physiques requise comprend de l'information de bloc de ressources physiques, PRB, requise et l'information de ressources physiques en utilisation comprend de l'information PRB en utilisation.

3. Procédé selon la revendication 2, où l'information PRB requise est déterminée sur la base de débits de codage de services pourvus aux utilisateurs et de l'information de quantité de bits disponibles par PRB, et
où l'information de quantité de bits disponibles par PRB comprend un schéma de modulation et de codage, MCS, ou un débit de code de produit d'ordre de modulation, MPR, à utiliser par une station de base par utilisateur, le MCS ou le MPR étant déterminés sur la base de l'information d'état de canal rapportée par les utilisateurs.

4. Procédé selon la revendication 2, comprenant en outre identifier les utilisateurs cible de libération de ressources de candidat sur la base de l'information PRB requise et l'information PRB en utilisation,
où l'utilisateur cible de libération de ressources de candidat est un utilisateur dont la quantité de PRB en utilisation est inférieure à la quantité de PRB requise, et
où l'au moins un utilisateur cible de libération de ressources est un utilisateur, parmi les utilisateurs cible de libération de ressources de candidat, ayant une priorité la plus basse déterminée sur la base de l'indicateur de qualité de canal, CQI.

5. Procédé selon la revendication 2, comprenant en outre l'un parmi :
où l'au moins un utilisateur cible de libération de ressources comprend un utilisateur, parmi la pluralité d'utilisateurs, ayant une quantité de PRB la plus haute,
où l'au moins un utilisateur cible de libération de ressources comprend un utilisateur ayant une différence la plus grande entre la quantité de PRB requise et la quantité de PRB en utilisation, et
où l'au moins un utilisateur cible de libération de ressources est déterminé sur la base de la quantité de PRB en utilisation d'un utilisateur spécifique et les quantités de PRB requises additionnellement de la pluralité d'utilisateurs.

6. Procédé selon la revendication 1, comprenant en outre :
déterminer, si l'état d'encombrement n'est pas résolu après la libération des ressources attribuées à l'au moins un utilisateur cible de libération de ressources, un utilisateur cible de libération de ressources additionnel ; et
libérer les ressources attribuées à l'utilisateur cible de libération de ressources additionnel,
où les ressources sont des supports attribués à l'utilisateur.

7. Procédé selon la revendication 1, où la détermination de l'au moins un utilisateur cible de libération de ressources comprend sélectionner un flux de service associé à la cible de libération de ressources, et la libération des ressources attribuées à l'au moins un utilisateur cible de ressources comprend libérer les ressources attribuées au flux de service sélectionné, et
où la libération de la ressource attribuée à l'utilisateur de flux de service sélectionné comprend l'un parmi :
le blocage, à une passerelle de réseau de données par paquets, P-GW, de la transmission de ressources sur un support portant le flux de service sélectionné, et
la réduction, à une passerelle de réseau de données par paquets, P-GW, du débit de transmission de ressources sur un support portant le flux de service sélectionné.

8. Dispositif de contrôle de l'encombrement (500) d'un système de communication mobile, le dispositif comprenant :
une unité de communication (510) configurée pour communiquer avec au moins un nœud de réseau ; et
une unité de contrôle (530) configurée pour contrôler l'identification d'un état d'encombrement, vérifier l'information de contrôle de l'encombrement incluant l'information de ressources physiques requise de chacun parmi une pluralité d'utilisateurs et l'information de ressources physiques en utilisation de chacun parmi la pluralité d'utilisateurs, déterminer au moins un utilisateur cible de libération de ressources sur la base de l'information de ressources physiques requise et l'information de ressources physiques en utilisation, et libérer les ressources attribuées à l'au moins un utilisateur cible de libération de ressources.

9. Dispositif selon la revendication 8, où l'information de ressources physiques requise comprend de l'information de bloc de ressources physiques, PRB, requise et l'information de ressources physiques en utilisation comprend de l'information PRB en utilisation.

10. Dispositif selon la revendication 9, où la quantité de PRB requise est déterminée sur la base de débits de codage des services pourvus aux utilisateurs et de l'information de quantité de bits disponibles par PRB, et
où l'information de quantité de bits disponibles par PRB comprend un schéma de modulation et de codage, MCS, ou un débit de code de produit d'ordre de modulation, MPR, à être utilisé par une station de base par utilisateur, le MCS ou le MPR étant déterminés sur la base de l'information d'état de canal rapportée par les utilisateurs.

11. Dispositif selon la revendication 9, où l'unité de contrôle est configurée pour contrôler l'identification des utilisateurs cible de libération de ressources de candidat sur la base de la quantité de PRB requise et la quantité de PRB en utilisation,
où l'utilisateur cible de libération de ressources de candidat est un utilisateur dont la quantité de PRB en utilisation est inférieure à la quantité de PRB requise, et
où l'au moins un utilisateur cible de libération de ressources est un utilisateur, parmi les utilisateurs cible de libération de ressources de candidat, ayant une priorité la plus basse déterminée sur la base de l'indicateur de qualité de canal, CQI.

12. Dispositif selon la revendication 9, comprenant en outre l'un parmi :
où l'au moins un utilisateur cible de libération de ressources comprend un utilisateur, parmi la pluralité d'utilisateurs, ayant une quantité de PRB la plus haute,
où l'au moins un utilisateur cible de libération de ressources comprend un utilisateur ayant une différence la plus grande entre la quantité de PRB requise et la quantité de PRB en utilisation, et
où l'au moins un utilisateur cible de libération de ressources est déterminé sur la base de la quantité de PRB en utilisation d'un utilisateur spécifique et des quantités de PRB requises additionnellement de la pluralité d'utilisateurs.

13. Dispositif selon la revendication 8, où l'unité de contrôle est configurée pour contrôler la détermination, si l'état d'encombrement n'est pas résolu après la libération des ressources attribuées à l'au moins un utilisateur cible de libération de ressources, un utilisateur cible de libération de ressources additionnel et la libération des ressources attribuées à l'utilisateur cible de libération de ressources additionnel.

14. Dispositif selon la revendication 8, où le dispositif est une fonction de règles de politique et de facturation, PCRF.

15. Dispositif selon la revendication 8, où l'unité de contrôle est configurée pour contrôler la sélection d'un flux de service associé à l'utilisateur cible de libération de ressources et la libération des ressources attribuées au flux de service sélectionné, et
où la libération de la ressource attribuée à l'utilisateur de flux de service sélectionné comprend l'un parmi :
l'unité de contrôle est configurée pour contrôler une passerelle de réseau de données par paquets, P-GW, pour bloquer la transmission de ressources sur un support portant le flux de service sélectionné, et
où l'unité de contrôle est configurée pour contrôler une passerelle de réseau de données par paquets, P-GW, pour réduire le débit de transmission de ressources sur un support portant le flux de service sélectionné.

16. Procédé selon la revendication 1, où l'information de contrôle de l'encombrement comprend de l'information de caractéristique d'application associée à un utilisateur ou un service.

17. Dispositif selon la revendication 8, où l'information de contrôle de l'encombrement comprend de l'information de caractéristique d'application associée à un utilisateur ou un service.
